# EUROPEAN PATENT APPLICATION

(11) **EP 3 450 000 A1**
(43) Date of publication of application: **06.03.2019**
(21) Application number: 18189011.2
(22) Date of filing: 14.08.2018
(51) Int. Cl.: B01D 63/02, B01D 19/00, F02C 7/224, B01D 61/00

(54) **HIGH TEMPERATURE AND PRESSURE LIQUID DEGASSING SYSTEMS**

(30) Priority: 18.08.2017 US 201715680956
(71) Applicant: Hamilton Sundstrand Corporation, Charlotte, NC 28217-4578 (US)
(72) Inventor: Cordatos, Haralambos, Colchester, CT Connecticut 06415 (US)
(74) Representative: Dehns

(57) **Abstract**

A hollow fiber cartridge (100) for a hollow fiber membrane degassing system, comprising a tube bundle (101) of selectively permeable membrane tubes having inner channels, the bundle including two ends (103a, 103b), and a tube sheet (105) at each end of the tube bundle (101) binding the ends of tube bundle. The tube sheets (105) are configured to mount the tube bundle (101) within a housing of the degassing system. The tube sheets (105) are comprised of one or more of at least one Fluorosilicone, at least one Fluorocarbon, or at least one Polysulfide.

## Description

### BACKGROUND

### 1. Field

The present disclosure relates to fluid degassing systems, more specifically to hollow fiber degassing systems (e.g., for fuel degassing such as deoxygenation).

### 2. Description of Related Art

Increased thermal loads and decreased fuel flows anticipated for next generation aircraft will cause higher temperature fuel considering fuel is used as a heat sink. However, when exposed to higher temperatures hydrocarbon fuels tend to form carbonaceous deposits due to the presence of dissolved oxygen, hence fuel stabilization will be required in order to meet performance and operability targets. The most efficient way to remove dissolved oxygen from fuel (the root cause of deposits) is by means of a membrane-based fuel deoxygenator.

Certain deoxygenators include tubular membranes, known as "hollow-fiber" membrane modules. Although hollow-fiber modules have been used extensively for gas separation applications, fuel deoxygenation on board an aircraft presents unique problems related to sealing the membrane against fuel leaks, for example. In particular, existing hollow-fiber modules with proven performance in hydrocarbon liquid degassing can operate at either ambient pressure and elevated temperatures or at elevated pressures and ambient temperatures, but they cannot do both because existing system may leak. Part of the reason is that the techniques currently used to seal the hollow fiber bundle against hot fuel pressure are inadequate for long-term performance in hot jet fuel under pressure.

Such conventional methods and systems have generally been considered satisfactory for their intended purpose. However, there is still a need in the art for liquid degassing systems for use in high stress environments. The present disclosure provides a solution for this need.

### SUMMARY

A hollow fiber cartridge for a hollow fiber membrane degassing system, comprising a tube bundle of selectively permeable membrane tubes having inner channels, the bundle including two ends, and a tube sheet at each end of the tube bundle binding the ends of tube bundle. The tube sheets are configured to mount the tube bundle within a housing of the degassing system. The tube sheets are comprised of one or more of at least one Fluorosilicone, at least one Fluorocarbon, or at least one Polysulfide.

The selectively permeable membrane tubes can include at least one of Teflon amorphous fluoropolymer (Teflon AF) (tetrafluoroethylene containing 2,2-bistrifluoromethyl-4,5-difluoro-1,3-dioxole) or Hyflon AD (tetra-fluoroethylene (TFE)-2,2,4-trifluoro-5-tri-fluorometoxy-1,3-dioxole). The at least one Polysulfide can include a poly-thio-ether. The at least one Polysulfide can include low-density manganese dioxide-cured polysulfide.

In certain embodiments, the tube sheets can be made entirely of the at least one Fluorosilicone. In certain embodiments, the tube sheets can be made entirely of the at least one Fluorocarbon. In certain embodiments, the tube sheets can be made entirely of the at least one Polysulfide.

In accordance with at least one aspect of this disclosure, a degassing device (e.g., for fuel deoxygenation) can include a housing and a hollow fiber cartridge as described herein. The cartridge can be disposed within the housing and sealed to the housing at the tube sheets. A first flow path is defined through the channels of the tubes and a second flow path is defined through the housing such that a fluid flowing in the housing traverses an outer surface of the tubes in the tube bundle and a gas permeates from the fluid through a wall of the tubes to enter the channel of the tubes and into the first flow path.

In accordance with at least one aspect of this disclosure, a method can include binding an end of a tube bundle of selectively permeable membrane tubes with an elastomer comprising one or more of at least one Fluorosilicone, at least one Fluorocarbon, or at least one Polysulfide. The method can include inserting the tube bundle with bound ends into a housing and sealing the bound ends to the housing to define two liquidly isolated flow paths.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of a cartridge in accordance with this disclosure;
Fig. 2 is a perspective view of a portion of an embodiment of a degassing device in accordance with this disclosure;
Fig. 3 is a schematic diagram illustrating various portions of the device of Fig. 2 in accordance with this disclosure.

### DETAILED DESCRIPTION

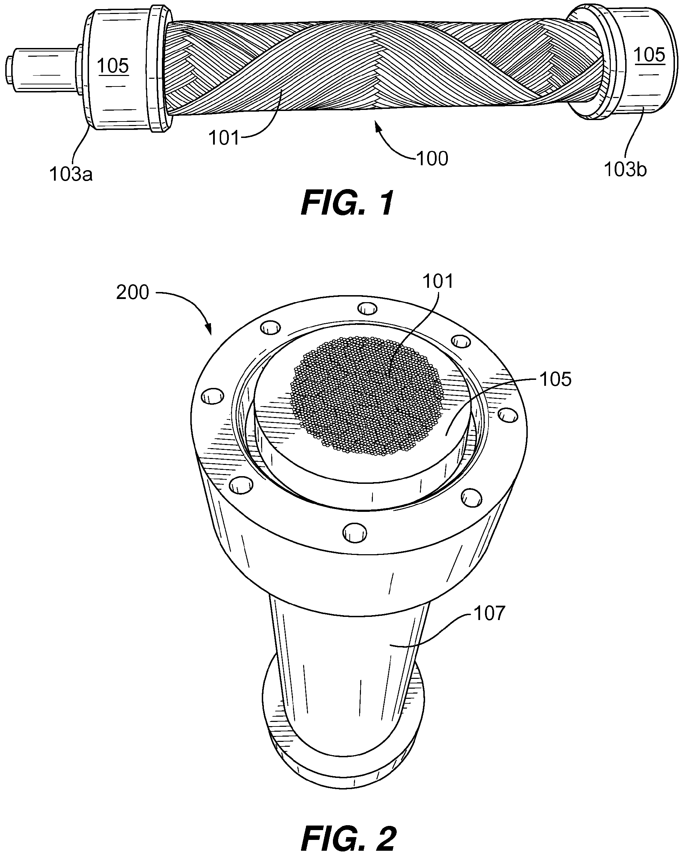

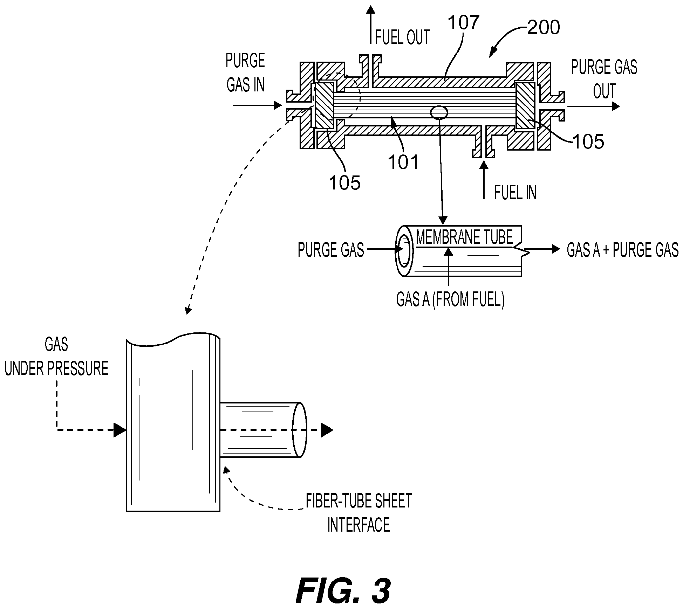

Reference will now be made to the drawings wherein like reference numerals identify similar structural features or aspects of the subject disclosure. For purposes of explanation and illustration, and not limitation, an illustrative view of an embodiment of a cartridge in accordance with the disclosure is shown in Fig. 1 and is designated generally by reference character 100. Other embodiments and/or aspects of this disclosure are shown in Figs. 2 and 3. The systems and methods described herein can be used to handle high heat and pressure in degassing systems (e.g., for aircraft fuel deoxygenation systems), for example.

Referring to Fig. 1, an embodiment of a hollow fiber cartridge 100 for a hollow fiber membrane degassing system (e.g., as shown in Figs. 2 and 3) includes a tube bundle 101 of selectively permeable membrane tubes having inner channels. The bundle 100 includes two ends 103a, 103b and a tube sheet 105 at each end of the tube bundle 101 binding the ends of tube bundle 101. Referring additionally to Figs. 2 and 3, the tube sheets 105 are configured to mount the tube bundle 101 within a housing 107 of the degassing system 200. The tube sheets 105 are comprised of one or more of at least one Fluorosilicone, at least one Fluorocarbon, or at least one Polysulfide.

The tube sheets 105 can be made of any suitable material that is less rigid than epoxy and can be chemically unreactive with the degassed fluid and temperature capable. For example, the tube sheets 105 can be made of any suitable material that is more flexible than epoxy, solid within a range of expected fuel temperatures, solid in range of expected pressures, and unreactive chemically with hydrocarbon based fuels. A suitable material can also exhibit very low creep when challenged with the combination of fuel pressure and temperature and its coefficient of thermal expansion can be similar to that of the hollow fiber membrane tubes, for example. During the "potting" process a suitable material can be liquid and it can be selected to properly wet the surface (e.g., Teflon AF or other suitable material) of the hollow fiber membrane tubes; hence it should have relatively low viscosity when in its liquid state (uncured) and good adhesion to the Teflon AF surface.

The selectively permeable membrane tubes can include (e.g., as a surface layer) at least one of Teflon amorphous fluoropolymer (Teflon AF) (tetrafluoroethylene containing 2,2-bistrifluoromethyl-4,5-difluoro-1,3-dioxole) or Hyflon AD (tetra-fluoroethylene (TFE)-2,2,4-trifluoro-5-tri-fluorometoxy-1,3-dioxole), for example, or any other suitable material for allowing permeation of a desired gas through the walls of the tubes. In certain embodiments, the at least one Polysulfide can include a poly-thio-ether. In certain embodiments, the at least one Polysulfide can include low-density manganese dioxide-cured polysulfide.

In certain embodiments, the tube sheets 105 can be made entirely of the at least one Fluorosilicone. In certain embodiments, the tube sheets 105 can be made entirely of the at least one Fluorocarbon. In certain embodiments, the tube sheets 105 can be made entirely of the at least one Polysulfide.

In accordance with at least one aspect of this disclosure, referring to Figs. 2 and 3 a degassing device 200 (e.g., for fuel deoxygenation) can include a housing 107 and a hollow fiber cartridge 100 as described herein. The cartridge 100 can be disposed within the housing 107 and sealed to the housing at the tube sheets 105 (e.g., via one or more o-rings and/or in any other suitable manner). As shown in Fig. 3, a first flow path (e.g., for purge gas and/or vacuum) is defined through the channels of the tubes. A second flow path is defined through the housing 107 such that a fluid flowing in the housing 107 (e.g., fuel as shown in Fig. 3) traverses an outer surface of the tubes in the tube bundle 101 and a gas permeates (e.g., gas A as shown in Fig. 3, e.g., oxygen) from the fluid through a wall of the tubes to enter the channel of the tubes and into the first flow path.

This general concept of two flow paths can also be achieved by any other suitable module configurations, not shown in Figs. 1-3. For example, fuel can enter the module in a central tube, which has only one inlet (dead-ended at the other) and multiple holes such that the fuel can exit radially through the holes. The fibers can form a bundle around the tube such that the fuel exiting the tube impinges onto the surface of the fibers before exiting the module from a hole in the housing. In such a case, the tube sheet is "doughnut" or toroidially shaped (surrounding each end of the center tube) yet the fuel and gas flow paths are separated.

In accordance with at least one aspect of this disclosure, a method can include binding an end 103a, 103b of a tube bundle 101 of selectively permeable membrane tubes with an elastomer comprising one or more of at least one Fluorosilicone, at least one Fluorocarbon, or at least one Polysulfide. The method can include inserting the tube bundle 101 with bound ends into a housing 107 and sealing the bound ends 103a, 103b to the housing 107 to define two liquidly isolated flow paths.

In embodiments, many fibers/tubes (e.g., thousands) form a tube bundle, which is potted at its two ends with an elastomer. Upon curing, the elastomer is cut at each end to expose the ends of the fibers, as shown in Fig. 2. With this method, the bore (the inner channel) of each tube is fluidly connected to one plenum, while the surface is exposed to a separate plenum. These two spaces can be separated by the elastomer and sealed against the pressure canister (housing 107) via O-rings, for example. As appreciated by those having ordinary skill in the art, a liquid (e.g., fuel) flows through the housing 107 and is in contact with the surface of the fibers, while the permeant gas(es) collect at the bore of each fiber and exit the module from one or both ends of the bundle 101.

As appreciated by those having ordinary skill in the art, existing hollow-fiber module tube sheet technology, which is derived from gas separation applications, is inadequate for properly sealing a jet fuel deoxygenator in the combination of fuel temperature and pressure. The interface between the fiber and the potting compound will be challenged directly under fuel pressure at elevated temperatures. Also, the tube bundles are traditionally made of a Teflon-like material (e.g., Teflon AF 1600) which is notoriously difficult to adhere to. Hence, embodiments utilize an elastomeric material rather than an inflexible epoxy because it affords much better durability under multiple temperature and pressure cycles, both in terms of stress dissipation as well as in terms of adhesion. The elastomeric materials can achieve the combination of properties desired for use in fuel degassing systems, e.g., temperature stability, adhesion to Teflon AF, compatibility with hot jet fuel, and "form-in-place" capability.

One concern in the potting process is the shrinking of the potting compound during the curing process. Certain embodiments utilize one or more Fluorosilicones and/or fluorocarbons. Certain embodiments utilize a polysulfide which can have working temperature of at least 121.1°C(250°F), for example. Embodiments can utilize a low-density manganese dioxide-cured polysulfide, which has low viscosity immediately after mixing and can cure at ambient temperature.

The methods and systems of the present disclosure, as described above and shown in the drawings, provide for degassing systems with superior properties. While the apparatus and methods of the subject disclosure have been shown and described with reference to embodiments, those skilled in the art will readily appreciate that changes and/or modifications may be made thereto without departing from the scope of the subject disclosure.

## Claims

1. A hollow fiber cartridge (100) for a hollow fiber membrane degassing system, comprising:
a tube bundle (101) of selectively permeable membrane tubes having inner channels, the bundle including two ends (103a, 103b); and
a tube sheet (105) at each end of the tube bundle (101) binding the ends of tube bundle, wherein the tube sheets (105) are configured to mount the tube bundle (101) within a housing of the degassing system, wherein the tube sheets (105) are comprised of one or more of at least one Fluorosilicone, at least one Fluorocarbon, or at least one Polysulfide.

2. The cartridge of claim 1, wherein the selectively permeable membrane tubes include at least one of Teflon amorphous fluoropolymer (Teflon AF) (tetrafluoroethylene containing 2,2-bistrifluoromethyl-4,5-difluoro-1,3-dioxole) or Hyflon AD (tetra-fluoroethylene (TFE)-2,2,4-trifluoro-5-tri-fluorometoxy-1,3-dioxole).

3. The cartridge of claims 1 or 2, wherein the at least one Polysulfide includes a poly-thio-ether.

4. The cartridge of claims 1 to 3, wherein the at least one Polysulfide includes low-density manganese dioxide-cured polysulfide.

5. The cartridge of claim 1, wherein the tube sheets (105) are made entirely of the at least one Fluorosilicone.

6. The cartridge of claim 1, wherein the tube sheets (105) are made entirely of the at least one Fluorocarbon.

7. The cartridge of claim 1, wherein the tube sheets (105) are made entirely of the at least one Polysulfide.

8. A hydrocarbon fuel degassing device (200), comprising:
a housing (107); and a
a hollow fiber cartridge (100) of Claim 1 disposed within the housing and sealed to the housing at the tube sheets, wherein a first flow path is defined through the channels of the tubes and a second flow path is defined through the housing such that a fluid flowing in the housing traverses an outer surface of the tubes in the tube bundle and a gas permeates from the fluid through a wall of the tubes to enter the channel of the tubes and into the first flow path.

9. The device of claim 8, wherein the selectively permeable membrane tubes include at least one of Teflon amorphous fluoropolymer (Teflon AF) (tetrafluoroethylene containing 2,2-bistrifluoromethyl-4,5-difluoro-1,3-dioxole) or Hyflon AD (tetra-fluoroethylene (TFE)-2,2,4-trifluoro-5-tri- fluorometoxy-1,3 -dioxole).

10. The device of claims 8 or 9, wherein the at least one Polysulfide includes a poly-thio-ether.

11. The device of claims 8 to 10, wherein the at least one Polysulfide includes low-density manganese dioxide-cured polysulfide.

12. The device of claim 8, wherein the tube sheets (105) are made entirely of the at least one Fluorosilicone.

13. The device of claim 8, wherein the tube sheets (105) are made entirely of the at least one Fluorocarbon.

14. The device of claim 8, wherein the tube sheets (105) are made entirely of the at least one Polysulfide.

15. A method, comprising:
binding an end of a tube bundle (101) of selectively permeable membrane tubes with an elastomer comprising one or more of at least one Fluorosilicone, at least one Fluorocarbon, or at least one Polysulfide.
